# EUROPEAN PATENT SPECIFICATION

(11) **EP 3 531 466 B1**
(45) Date of publication and mention of the grant of the patent: **18.10.2023**
(21) Application number: 19158685.8
(22) Date of filing: 21.02.2019
(51) Int. Cl.: H01M 50/103, H01M 50/296

(54) **BATTERY PACK**
BATTERIEPACK
BLOC-BATTERIE

(30) Priority: 23.02.2018 KR 20180022233
(43) Date of publication of application: 28.08.2019
(73) Proprietor: Samsung SDI Co., Ltd., Gyeonggi-do (KR)
(72) Inventor: KIM, Junseop, Gyeonggi-do (KR); KANG, Iloh, Gyeonggi-do (KR); MOON, Deayon, Gyeonggi-do (KR); WOO, Minuk, Gyeonggi-do (KR); LEE, Wonil, Gyeonggi-do (KR)
(74) Representative: Marks & Clerk LLP

(56) References cited:
- KR-A- 20160 052 018
- KR-A- 20160 080 359
- US-A1- 2013 224 524
- US-A1- 2015 207 117
- US-A1- 2016 322 614
- US-A1- 2016 322 617
- US-A1- 2016 336 577
- US-A1- 2016 351 881

## Description

### BACKGROUND

### 1. Field

Aspects of one or more embodiments relate to a battery pack.

### 2. Description of the Related Art

In general, secondary batteries are rechargeable, unlike non-rechargeable primary batteries. Secondary batteries are used as energy sources of devices, such as mobile devices, electric vehicles, hybrid vehicles, electric bicycles, or uninterruptible power supplies. Secondary batteries are individually used, or secondary battery modules (battery packs) each including a plurality of secondary batteries connected as one unit are used according to the types of external devices using secondary batteries.

Unlike small mobile devices, such as cellular phones, each operable for a certain period of time using a single battery, devices such as electric vehicles or hybrid vehicles having long operation times and consuming large amounts of electricity may use battery modules each including a plurality of batteries (battery cells) to handle problems relating to power and capacity, and the output voltages or currents of battery modules may be increased by adjusting the number of batteries included in each battery module. US 2016/351881, US 2016/336577, KR2016/008359, US 2016/336577, US 2013/224524, US 2015/207117, KR 2016/0052018 and US 2016/322617 all provide disclosures related to battery packs.

### SUMMARY

According to an aspect there is provided a battery pack according to Claim 1. Details of embodiments are provided in the dependent claims.

### BRIEF DESCRIPTION OF THE DRAWINGS

These and/or other aspects will become apparent and more readily appreciated from the following description of some embodiments, taken in conjunction with the accompanying drawings in which:
FIG. 1 is a perspective view illustrating a battery pack according to an embodiment;
FIG. 2 is an exploded perspective view illustrating the battery pack shown in FIG. 1;
FIG. 3 is a front view illustrating the battery pack in a direction III in FIG 1;
FIG. 4 is a rear view illustrating the battery pack in a direction IV in FIG. 1;
FIG. 5 is a top view illustrating the battery pack in a direction V in FIG 1;
FIG. 6 is a side view illustrating the battery pack in a direction VI in FIG 1;
FIG. 7 is a lower perspective view illustrating the battery pack shown in FIG 1;
FIG. 8 is a view illustrating a battery pack array extended based on the battery pack of FIG. 1 as a unit battery pack to include a plurality of such battery packs for providing high output power;
FIG. 9 is a perspective view illustrating a master pack shown in FIG. 8;
FIG. 10 is a front view illustrating the master pack in a direction X in FIG. 9;
FIG. 11 is a top view illustrating the master pack in a direction XI in FIG. 9; and
FIG. 12 is a side view illustrating the master pack in a direction XII in FIG. 9.

### DETAILED DESCRIPTION

Reference will now be made in further detail to some embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

It is to be understood that, although the terms "first," "second," etc. may be used herein to describe various components, these components should not be limited by these terms. These terms are used to distinguish one component from another.

As used herein, the singular forms "a," "an," and "the" are intended to include the plural forms as well, unless the context clearly indicates otherwise.

It is to be understood that the terms "comprise," "include," and "have" used herein specify the presence of stated features or components, but do not preclude the presence or addition of one or more other features or components.

Sizes of components in the drawings may be exaggerated for convenience of description. In other words, since the sizes and thicknesses of components in the drawings may be arbitrarily illustrated for convenience of description, the following embodiments are not limited thereto.

When a certain embodiment may be implemented differently, a particular process order may be performed differently from the described order. For example, two consecutively described processes may be performed substantially at the same time or performed in an order opposite to the described order.

It is to be understood that when a layer, region, or component is referred to as being "connected to" another layer, region, or component, it may be directly connected to the other layer, region, or component or may be indirectly connected to the other layer, region, or component with one or more intervening layers, regions, or components interposed therebetween. For example, it is to be understood that when a layer, region, or component is referred to as being "electrically connected to" another layer, region, or component, it may be directly electrically connected to the other layer, region, or component or may be indirectly electrically connected to the other layer, region, or component with one or more intervening layers, regions, or components interposed therebetween.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which example embodiments of the inventive concept belong. It is to be further understood that terms, such as those defined in commonly-used dictionaries, should be interpreted as having a meaning that is consistent with their meaning in the context of the relevant art and will not be interpreted in an idealized or overly formal sense unless expressly so defined herein.

Battery packs will now be described with reference to the accompanying drawings, in which some embodiments of the present disclosure are shown.

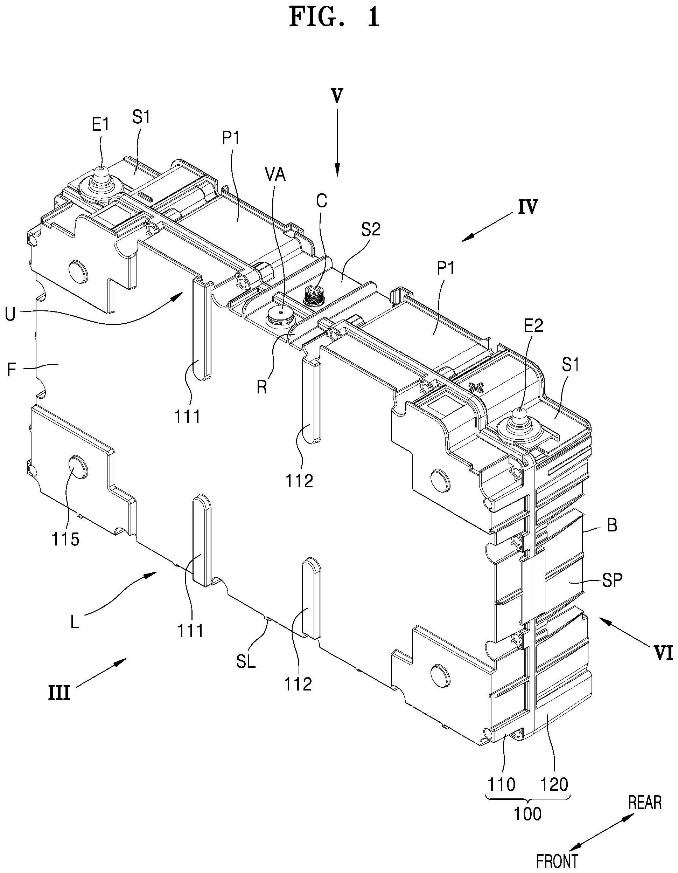

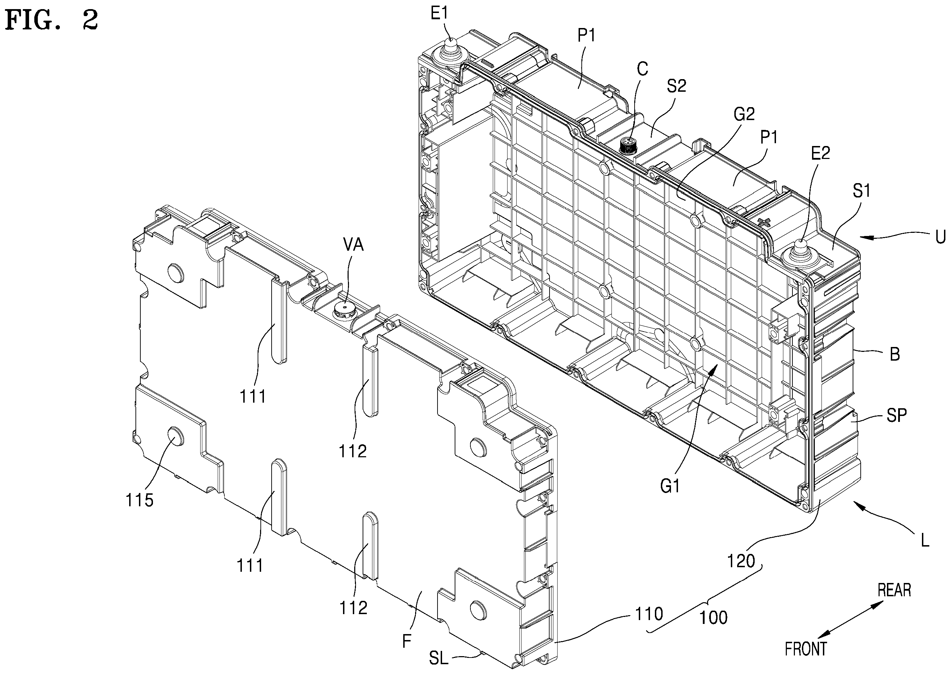

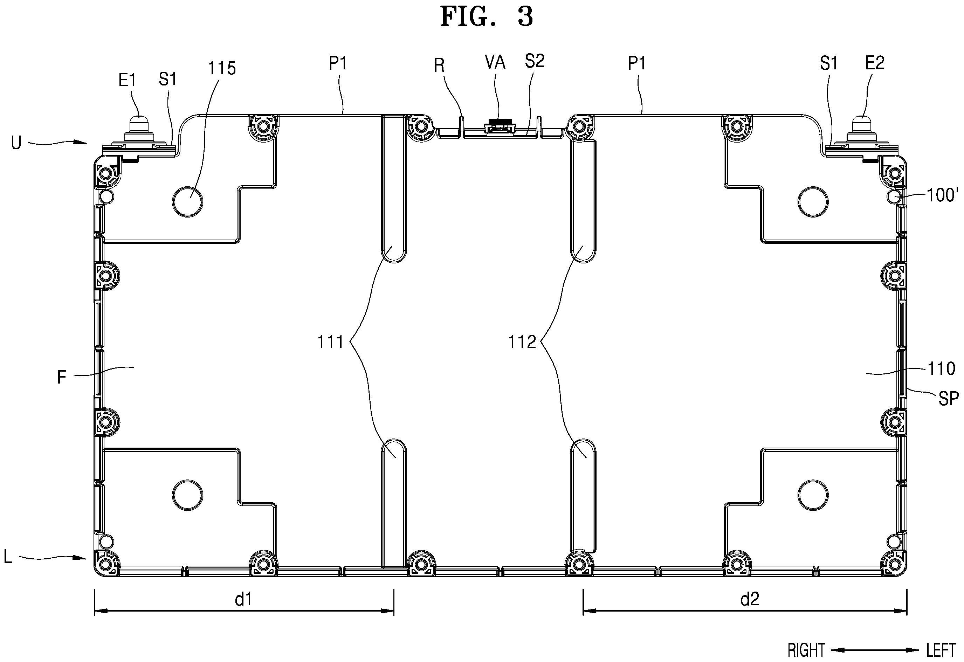

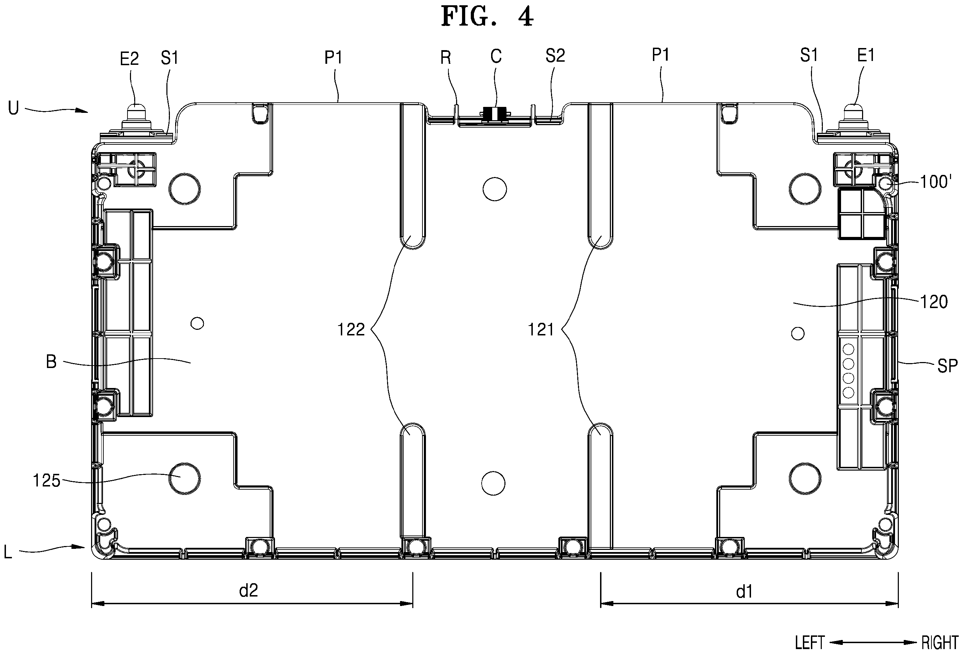

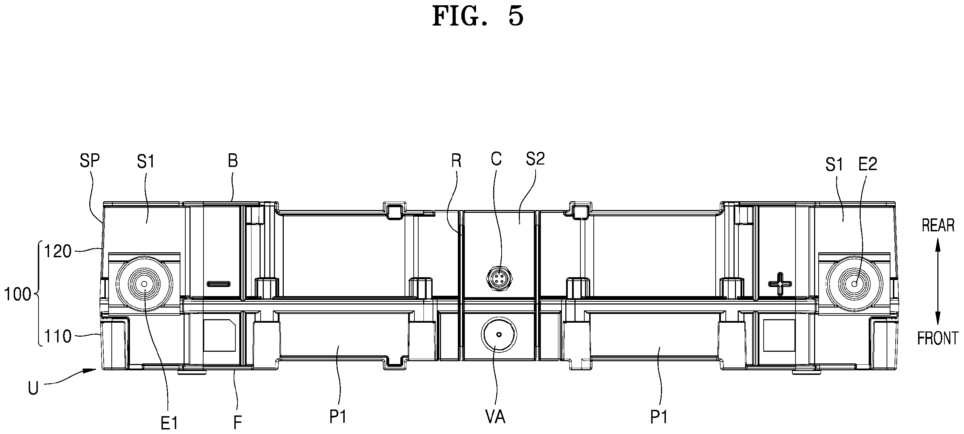

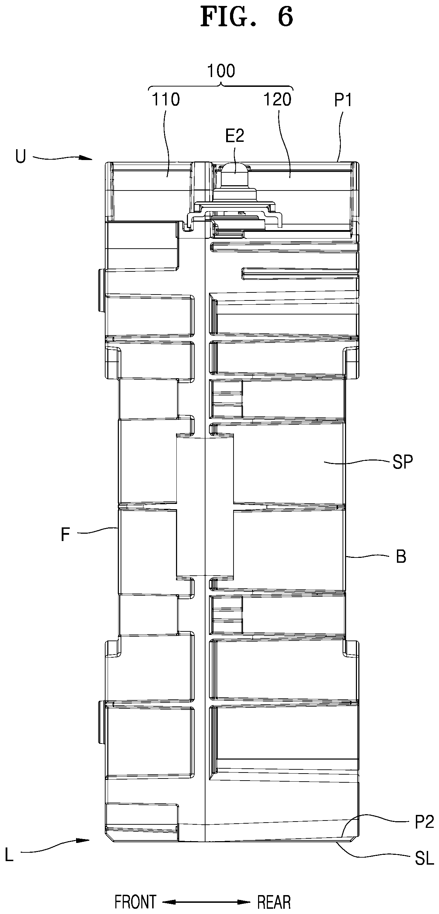

FIG. 1 is a perspective view illustrating a battery pack 100 according to an embodiment; FIG. 2 is an exploded perspective view illustrating the battery pack 100 depicted in FIG. 1; FIG. 3 is a front view illustrating the battery pack 100 in a direction III in FIG 1; FIG. 4 is a rear view illustrating the battery pack 100 in a direction IV in FIG. 1; FIG. 5 is a top view illustrating the battery pack 100 in a direction V in FIG 1 ; and FIG. 6 is a side view illustrating the battery pack 100 in a direction VI in FIG 1.

Referring to FIGS. 1 and 2, the battery pack 100 may include: a front case 110 and a rear case 120 that face each other and are coupled to each other in a front-rear direction; a cell accommodation portion G1 (refer to FIG. 2) configured to accommodate at least one battery cell (not shown); and a battery management system (BMS) accommodation portion G2 (refer to FIG. 2).

Although not shown in FIGS. 1 and 2, the battery pack 100 may include a plurality of battery cells (not shown) electrically connected to each other, and a BMS (not shown) configured to collect information about the states of the battery cells and control charge-discharge operations of the battery cells on the basis of the state information. The battery pack 100 may include the front case 110 and the rear case 120, which are coupled to each other in the front-rear direction in which the front case 110 and the rear case 120 face each other, for accommodating the battery cells and the BMS. The battery pack 100 may include an accommodation space to accommodate the battery cells (not shown) and the BMS (not shown), that is, the cell accommodation portion G1 (refer to FIG. 2) to accommodate the battery cells and the BMS accommodation portion G2 provided on a side of the cell accommodation portion G1. The BMS accommodation portion G2 may be located on an upper side of the cell accommodation portion G1, for example, at an upper position of a case adjacent to a first side U of the battery pack 100 on which output terminals E1 and E2 are provided. The output terminals E1 and E2 are for providing electrical output power to an external device and may form a charge-discharge path that is connected to the BMS (not shown) at a position adjacent to the BMS accommodation portion G2.

The battery pack 100 may include the first side U corresponding to an upper portion of the battery pack 100, and a second side L opposite the first side U and corresponding to a lower portion of the battery pack 100. The first side U and the second side L may be distinguished from each other as follows: the output terminals E1 and E2 may protrude upward from the first side U, and support ribs SL may be provided on the second side L as a support base of the battery pack 100 with respect to a floor (not shown).

The battery pack 100 may include: the first side U on which the output terminals E1 and E2 are provided; the second side L opposite the first side U; a front side F and a rear side B located between the first side U and the second side L and connecting the first side U and the second side L to each other, the front side F and the rear side B being main sides having relatively large areas; and lateral sides SP located between the first side U and the second side L and connecting the first side U and the second side L to each other, the lateral sides SP having relatively small areas. The first side U, the second side L, the front side F, the rear side B, and the lateral sides SP of the battery pack 100 relate to the external shape of the battery pack 100 and may be on the front case 110 and the rear case 120 forming the external shape of the battery pack 100. For example, the front case 110 may form the first side U, the second side L, the front side F, and the lateral sides SP of the battery pack 100 at a front position of the battery pack 100, and the rear case 120 may form the first side U, the second side L, the rear side B, and the lateral sides SP of the battery pack 100 at a rear position of the battery pack 100.

Referring to FIGS. 3 to 5, the output terminals E1 and E2 may be provided on the first side U of the battery pack 100. For example, the output terminals E1 and E2 may include a first output terminal E1 and a second output terminal E2 that have different polarities and are provided on both lateral peripheral positions on the first side U of the battery pack 100 in a left-right direction.

The first side U of the battery pack 100 may include: a first surface P1 having a largest area and functioning as a reference or support surface of the battery pack 100; and first and second height-difference surfaces S1 and S2 stepped downward from the first surface P1. In an embodiment, the output terminals E1 and E2 of the battery pack 100 may be provided on the first height-difference surfaces S1, and a pressure regulating valve VA and a communication terminal C may be provided on the second height-difference surface S2.

In an embodiment, the first and second height-difference surfaces S1 and S2 are stepped downward from the first surface P1 that is the highest level of the battery pack 100. The output terminals E1 and E2 are provided in spaces corresponding to a height difference between the first surface P1 and the first height-difference surfaces S1, and, thus, the output terminals E1 and E2 protruding from the first height-difference surfaces S1 may be protected. For example, when the battery pack 100 receives an external impactive force, for example, as a result of falling, the impactive force may act on the first surface P1 instead of the output terminals E1 and E2, and, since the first surface P1 having a large area may distribute the impactive force, the battery pack 100 may not be damaged.

The pressure regulating valve VA and the communication terminal C are provided in a space corresponding to a height difference between the first surface P1 and the second height-difference surface S2, and, thus, the pressure regulating valve VA and the communication terminal C protruding from the second height-difference surface S2 may be protected. For example, when the battery pack 100 receives an external impactive force, for example, as a result of falling, the impactive force may act on the first surface P1 instead of the pressure regulating valve VA or the communication terminal C, and, since the first surface P1 having a large area may distribute the impactive force, the battery pack 100 may not be damaged.

In the battery pack 100 according to an embodiment, the first surface P1 of the battery pack 100 forms the uppermost surface facing outward and having the highest level, and the first surface P1 may provide a support surface for other upper structures, and the first surface P1 provides the largest flat surface on the first side U of the battery pack 100, such that the first surface P1 may provide a reference surface based on which assembling positions of the battery pack 100 may be defined when assembling the battery pack 100.

In an embodiment, since the first surface P1 forms the highest level protruding outward from the first side U of the battery pack 100, when the battery pack 100 receives an external impactive force, for example, as a result of falling, the first surface P1 may be a surface to which the impactive force is directly applied, and the impactive force may be uniformly distributed to a large area because the first surface P1 is the largest flat area on the first side U of the battery pack 100. Here, the expression "the first surface P1 of the battery pack 100 is a large flat surface" may mean that protruding structures such as ribs are not formed on the first surface P1.

In an embodiment, the first surface P1 may be provided on the first side U of the battery pack 100 at a relatively center position and may include a pair of first surfaces P1 provided at center positions spaced apart from each other. The pair of first surfaces P1 may be spaced apart from each other in the left-right direction of the battery pack 100, and the second height-difference surface S2 may be provided between the pair of first surfaces P1 spaced apart from each other. For example, the pair of first surfaces P1 may be spaced apart from each other with the second height-difference surface S2 being therebetween, and the first height-difference surfaces S1 may be provided outside the pair of first surfaces P1.

The first height-difference surfaces S1 may be provided on the first side U of the battery pack 100 at left and right positions in the left-right direction of the battery pack 100 and may be stepped downward from the first surface P1. Here, the left-right direction of the battery pack 100 may be a direction connecting the first and second output terminals E1 and E2 of the battery pack 100, or in which the first and second output terminals E1 and E2 are spaced apart.

In an embodiment, the first height-difference surfaces S1 may be provided at the outermost sides of the first side U in the left-right direction of the battery pack 100. Thus, the output terminals E1 and E2 provided on the first height-difference surfaces S1 may be at the outermost sides of the battery pack 100 in the left-right direction, and, thus, the formation of an electrical short circuit may be prevented or substantially prevented between the output terminals E1 and E2. For example, since the output terminals E1 and E2 are provided at the outermost sides of the battery pack 100, accidents caused by a short circuit with the output terminals E1 and E2 may be prevented or reduced.

In an embodiment, a communication line (not shown) for communication with a neighboring battery pack 100 or an exhaust duct (not shown) extending to a neighboring battery pack 100 may be provided at a center position of the battery pack 100, and the communication line or the exhaust duct may be connected to the communication terminal C or the pressure regulating valve VA and may extend to the neighboring battery pack 100 across the center position of the battery pack 100. Since the output terminals E1 and E2 are provided on the outermost first height-difference surfaces S1, that is, on the outermost sides of the battery pack 100 away from the center position of the battery pack 100, an electrical short circuit may be prevented or substantially prevented between the output terminals E1 and E2 and surrounding structures, and the stability of the battery pack 100 may be improved. For example, a communication line (not shown) through which a relatively low current flows may be provided at the center position of the battery pack 100 in the left-right direction, and the output terminals E1 and E2 forming a high current path such as a charge-discharge path may be provided on the outermost sides of the battery pack 100 in the left-right direction. The output terminals E1 and E2 forming a high current path having a relatively high risk of accidents may be located on the outermost sides of the battery pack 100, and the communication terminal C forming a relatively low current path having a relatively low risk of accidents may be located at the center position of the battery pack 100.

Referring to FIG. 5, in an embodiment, the output terminals E1 and E2 may be located at center positions in a thickness direction of the battery pack 100, and, thus, the risk of electrical short circuits may decrease in the high current path including the output terminals E1 and E2. Here, the thickness direction of the battery pack 100 may be the front-rear direction of the battery pack 100 in which the front case 110 and the rear case 120 are arranged.

In an embodiment, the front case 110 and the rear case 120 of the battery pack 100 may have different thicknesses, and the output terminals E1 and E2 may be provided on the rear case 120 having a relatively large thickness. The output terminals E1 and E2 may be provided on the rear case 120 at positions biased toward the front case 110 such that the output terminals E1 and E2 may be at center positions in the thickness direction of the battery pack 100.

Referring to FIGS. 3 to 5, based on the first surface P1 forming the uppermost surface of the first side U of the battery pack 100, the first and second height-difference surfaces S1 and S2 are stepped downward from the first surface P1 at opposite positions of the first surface P1. In this structure, the output terminals E1 and E2 forming a high current path are located on the first height-difference surfaces S1, and the communication terminal C forming a low current path is located on the second height-difference surface S2 such that the output terminals E1 and E2 and the communication terminal C protruding from the first and second height-difference surfaces S1 and S2 may be protected. In addition, based on the first surface P1 between the first and second height-difference surfaces S1 and S2, the output terminals E1 and E2 forming a high current path and the communication terminal C forming a low current path are spaced apart from each other such that a short circuit between the high current path and the low current path may be prevented or substantially prevented.

The output terminals E1 and E2, the communication terminal C, and the pressure regulating valve VA protrude from the first and second height-difference surfaces S1 and S2 such that connection to the output terminals E1 and E2, the communication terminal C, and the pressure regulating valve VA may be easily performed. For example, bus bars (not shown) may be connected to the output terminals E1 and E2 to form a charge-discharge path, a communication line (not shown) may be connected to the communication terminal C, and a tube such as an exhaust duct (not shown) may be connected to the pressure regulating valve VA. In addition, since the first surface P1 having the highest level is provided between the output terminals E1 and E2 and the communication terminal C respectively protruding from the first and second height-difference surfaces S1 and S2 or between the output terminals E1 and E2 and the pressure regulating valve VA, the possibility of an electrical short circuit between the output terminals E1 and E2, the communication terminal C, and the pressure regulating valve VA, for example, caused by an external member, may be reduced.

Since the output terminals E1 and E2 of the battery pack 100 protrude from the first height-difference surfaces S1, connection to the output terminals E1 and E2 may be easily performed, and since the output terminals E1 and E2 protrude in spaces corresponding to a height difference between the first height-difference surfaces S1 and the first surface P1, the output terminals E1 and E2 may be protected by the first surface P1 when an external impactive force is applied to the battery pack 100, for example, as a result of falling.

Since the communication terminal C and the pressure regulating valve VA of the battery pack 100 protrude from the second height-difference surface S2, connection to the communication terminal C and the pressure regulating valve VA of the battery pack 100 may be easily performed, and since the communication terminal C and the pressure regulating valve VA of the battery pack 100 protrude in a space corresponding to a height difference between the second height-difference surface S2 and the first surface P1, the communication terminal C and the pressure regulating valve VA may be protected by the first surface P1 when an external impactive force is applied to the battery pack 100, for example, as a result of falling. In an embodiment, the pressure regulating valve VA may be provided on the front case 110 of the battery pack 100, and the communication terminal C may be provided on the rear case 120 of the battery pack 100. For example, the pressure regulating valve VA and the communication terminal C may be provided on the second height-difference surface S2 between the pair of first surfaces P1, and, in this case, the pressure regulating valve VA and the communication terminal C may respectively be provided on the front case 110 and the rear case 120 such that the pressure regulating valve VA and the communication terminal C may be at front and rear positions. In this case, the pressure regulating valve VA and the communication terminal C may be provided on the second height-difference surface S2 at the same level.

In an embodiment, barrier ribs R may be provided on the second height-difference surface S2 on which the pressure regulating valve VA and the communication terminal C are located. In an embodiment, the pressure regulating valve VA and the communication terminal C are provided at center positions of the battery pack 100, and the barrier ribs R may be provided to isolate the pressure regulating valve VA and the communication terminal C from external members or components of the battery pack 100 extending across the center positions. The barrier ribs R may include a pair of barrier ribs R extending in parallel to each other with the pressure regulating valve VA and communication terminal C being therebetween.

The first and second height-difference surfaces S1 and S2 may be lower than the first surface P1 and may be stepped downward from the first surface P1. In an embodiment, the first and second height-difference surfaces S1 and S2 may be at different levels. In an embodiment, the first height-difference surfaces S1 on which the output terminals E1 and E2 having a relatively great protruding height are provided may be lower than the second height-difference surface S2 on which the communication terminal C or the pressure regulating valve VA having a relatively small protruding height. Thus, leading ends of the output terminals E1 and E2, the communication terminal C, and the pressure regulating valve VA may be substantially at a same level as the first surface P1 or may be lower than the first surface P1 in the protruding direction thereof. That is, at least the leading ends of the output terminals E1 and E2, the communication terminal C, and the pressure regulating valve VA may not protrude above the first surface P1.

Referring to FIG. 2, the first surface P1 of the battery pack 100 forms the uppermost surface of the first side U, and the BMS accommodation portion G2 may be provided in an inner region of the case adjoining the first surface P1. Since the BMS accommodation portion G2 is provided above the cell accommodation portion G1 in a surplus space formed by the first surface P1 protruding upward to protect the output terminals E1 and E2, the battery pack 100 may have a compact structure and high energy density compared to other battery packs occupying the same space.

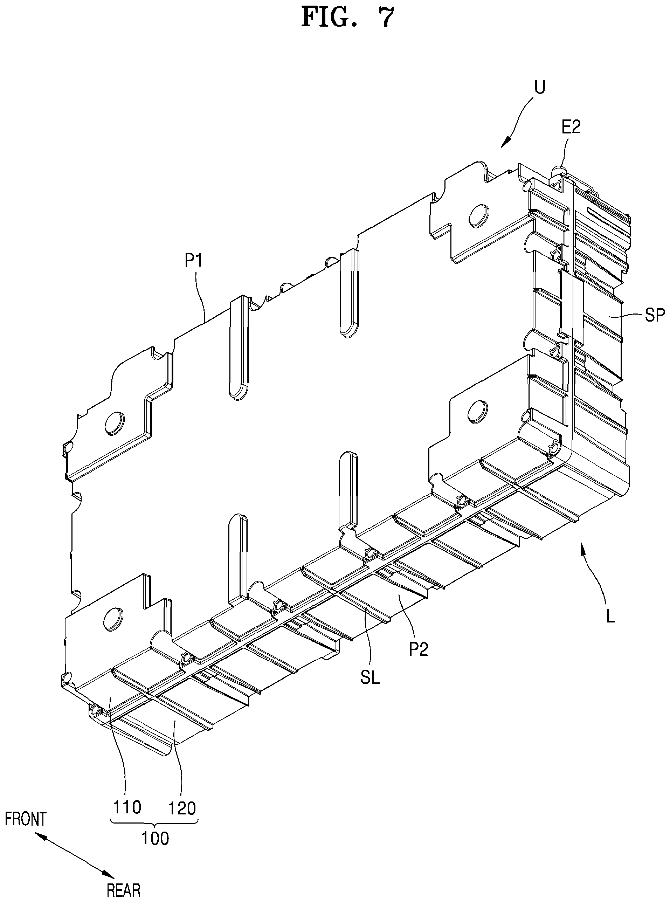

FIG. 7 is a lower perspective view illustrating the battery pack shown in FIG 1.

Referring to FIGS. 6 and 7, the battery pack 100 includes the second side L opposite the first side U on which the output terminals E1 and E2 are provided, and an inclined second surface P2 and support ribs SL protruding downward from the second surface P2 is provided on the second side L of the battery pack 100.

The second surface P2 of the battery pack 100 is inclined and is not be flat, unlike the first surface P1. For example, the battery pack 100 includes the front case 110 and the rear case 120 forming the exterior of the battery pack 100, and the rear case 120 having a relatively great thickness includes the inclined second surface P2 and the support ribs SL protruding from the second surface P2 and forming a flat bottom surface parallel to a floor (not shown).

The rear case 120 is formed through a molding process by injecting a molten resin into a mold (not shown) and separating a molded product formed as the molten resin solidifies in a shape corresponding to the mold. In this case, the molded product of the rear case 120 solidified in the mold (not shown) may be easily separated from the mold because the second surface P2 of the rear case 120 is inclined. For example, since the rear case 120 is thicker than the front case 110, when the molded product of the rear case 120 is separated from a mold (not shown), the appearance of the molded product of the rear case 120 may likely be damaged. Thus, according to the present disclosure, the second surface P2 of the rear case 120 having a relatively great thickness is inclined such that when a molded product of the rear case 120 is separated from a mold (not shown), the molded product of the rear case 120 may not be damaged by physical interference with the mold. In an embodiment, unlike the second surface P2 of the rear case 120, the first surface P1 may not be inclined, but may be flat. Since the second surface P2 of the rear case 120 is inclined, a portion between the first and second surfaces P1 and P2 of the rear case 120 may easily be separated from a mold. For example, the expression "the second surface P2 of the rear case 120 is inclined" means that the second surface P2 of the rear case 120 is inclined toward the first surface P1 such that the second surface P2 gradually approaches the first surface P1 in a direction toward the rear side B of the rear case 120.

The support ribs SL may be provided on the second side L of the rear case 120 in such a manner that the support ribs SL protrude from the inclined second surface P2 and form a flat bottom surface parallel to a floor (not shown). Since the support ribs SL form a flat bottom surface parallel to a floor (not shown), the support ribs SL may provide a support base for stably supporting the battery pack 100. That is, the support ribs SL may protrude from the second surface P2 inclined with respect to a floor (not shown) to provide a flat bottom surface making contact with the floor (not shown), and due to the support ribs SL, the battery pack 100 may stably stand on the floor (not shown).

When the rear case 120 which is thicker than the front case 110 is fabricated, a molded product of the rear case 120 may be damaged by physical interference with a mold while being separated from the mold. To prevent or substantially prevent this, the second surface P2 of the first and second surfaces P1 and P2 facing each other may be inclined with respect to the first surface P1. Similarly, referring to FIG. 5, the lateral sides SP of the rear case 120 may not be parallel to each other, but may be inclined with respect to each other. For example, the lateral sides SP of the rear case 120 may be inclined in such a manner that the lateral sides SP gradually approach each other in a direction toward the rear side B of the rear case 120. In an embodiment, since the second surface P2 and the lateral sides SP of the rear case 120 are inclined as described above, when the rear case 120 is separated from a mold (not shown) during a manufacturing process, the rear case 120 may not be damaged by physical interference between the mold and a molded product of the rear case 120.

In an embodiment, like the lateral sides SP of the rear case 120, the lateral sides SP of the front case 110 may not be parallel to each other, but may be inclined with respect to each other. For example, the lateral sides SP of the front case 110 may be inclined in such a manner that the lateral sides SP gradually approach each other in a direction toward the front side F of the front case 110.

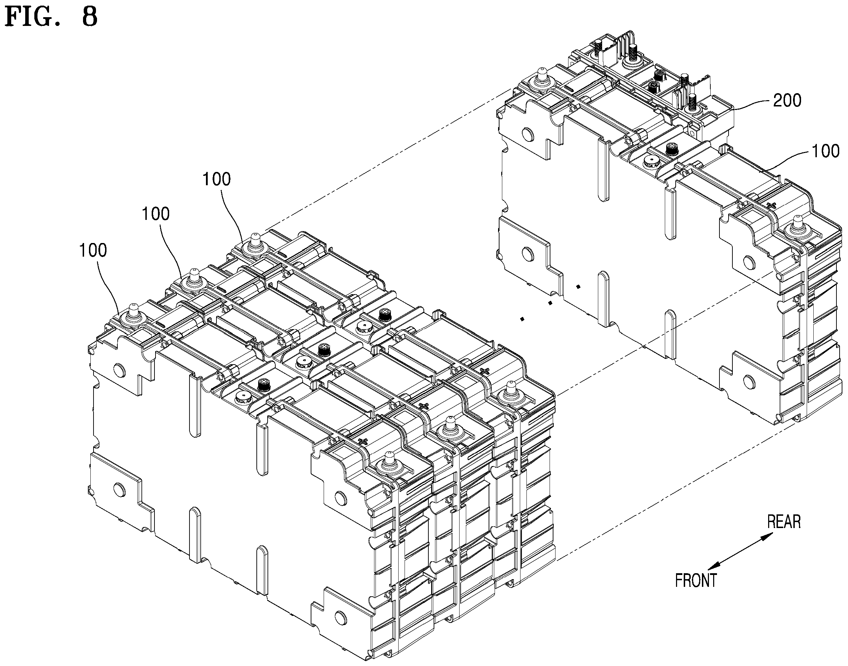

FIG. 8 is a view illustrating a battery pack array extended based on the battery pack 100 of FIG. 1 as a unit battery pack to include a plurality of such battery packs 100 for providing high output power.

Referring to FIG. 8, a battery pack 100 may be connected to other battery packs 100 having the same shape and arranged at front and rear sides of the battery pack 100 to flexibly cope with high-power, high-capacity requirements, and the number of such unit battery packs 100 having substantially the same shape may be increased to actively cope with various output power requirements.

In an embodiment, the number of unit battery packs 100 connected to each other may be increased to extend the battery pack array. For example, in an application requiring relatively low output power, a relatively small number of battery packs 100 may be connected to each other to provide a battery pack array having relatively low output power, and, in an application requiring relatively high output power, a relatively large number of battery packs 100 may be connected to each other to provide a battery pack array having relatively high output power. Since battery packs 100 having substantially the same shape are used to actively cope with various output power requirements, the efficiency of production may be increased, and overlapping investment in designs and production facilities for producing battery packs having difference structures for different output power requirements may be avoided.

In the battery pack array shown in FIG. 8, neighboring battery packs 100 may be arranged in the same left-right orientation such that the same polarities of the battery packs 100 may face each other, and the same polarities of the battery packs 100 may be connected to each other using bus bars (not shown) extending in the arrangement direction of the battery packs 100 to connect the battery packs 100 in parallel to each other.

Although not shown in FIG. 8, according to some embodiments, neighboring battery packs 100 may be arranged with left-right reverse orientations such that different polarities of the battery packs 100 may face each other, and the different polarities of the battery packs 100 may be connected to each other using bus bars (not shown) extending in the arrangement direction of the battery packs 100 to connect the battery packs 100 in series to each other.

Referring to FIGS. 3 and 4, the battery pack 100 may include assembly structures for connection with neighboring battery packs 100 such that a plurality of such battery packs 100 may be easily connected to each other for extension. That is, front assembly portions 115 and rear assembly portions 125 may be provided in the front-rear direction of the battery pack 100 for assembly with other battery packs 100. This will now be described.

The battery pack 100 may include the front case 110 and the rear case 120 facing each other and coupled to each other in the front-to-rear direction, and the front side F of the front case 110 and the rear side B of the rear case 120 respectively face other battery packs 100 arranged in the front-to-rear direction. In this case, the front assembly portions 115 and the rear assembly portions 125 may be provided on the front side F of the front case 110 and the rear side B of the rear case 120, respectively. In this case, the front assembly portions 115 and the rear assembly portions 125 may be provided on the front side F of the front case 110 and the rear side B of the rear case 120, respectively, at positions corresponding to each other.

For example, the front assembly portions 115 and the rear assembly portions 125 may be provided at corner positions of the front side F of the front case 110 and the rear side B of the rear case 120, respectively. For example, the front assembly portions 115 and the rear assembly portions 125 may be provided at four corner positions of the front side F of the front case 110 and four corner positions of the rear side B of the rear case 120, respectively. Here, the corner positions may have a comprehensive meaning including biased positions closer to corners of the front side F of the front case 110 and the rear side B of the rear case 120 than the centers of the front side F of the front case 110 and the rear side B of the rear case 120.

For example, the front assembly portions 115 and the rear assembly portions 125 may have complementary shapes for insertion fitting, such as an embossed or protruding shape and an engraved or recessed shape. For example, embossed assembly portions 115 or 125 may be provided on one of the front case 110 and the rear case 120, and engraved assembly portions 115 or 125 may be provided on the other of the front case 110 and the rear case 120. In an embodiment, embossed front assembly portions 115 may be provided on the front side F of the front case 110, and engraved rear assembly portions 125 may be provided on the rear side B of the rear case 120.

In the battery pack array assembled in the front-to-rear direction, the front assembly portions 115 on the front case 110 may be coupled to rear assembly portions 125 of a front neighboring battery pack 100, and the rear assembly portions 125 of the rear case 120 may be coupled to front assembly portions 115 of a rear neighboring battery pack 100. In this manner, since neighboring battery packs 100 of the battery pack array are assembled by insertion fitting between front assembly portions 115 and rear assembly portions 125, the battery pack array may have improved structural rigidity, and the battery packs 100 of the battery pack array may be automatically or easily aligned with each other.

In an embodiment, the front assembly portions 115 and the rear assembly portions 125 may respectively be provided at the four corner positions of the front side F of the front case 110 and the four corner positions of the rear side B of the rear case 120. In an embodiment, the front assembly portions 115 and the rear assembly portions 125 for coupling neighboring battery packs 100 to each other are provided at the four corner positions of the front side F of the front case 110 and the four corner positions of the rear side B of the rear case 120 that are relatively distant from each other, such that relative movement of the neighboring battery packs 100 may be effectively suppressed. For example, pairs of front assembly portions 115 and rear assembly portions 125 complementarily coupled to each other may resist relative rotation between neighboring battery packs 100, and four pairs of front assembly portions 115 and rear assembly portions 125 provided at four corner positions spaced apart from each other may form relatively long rotation arms because the four pairs are relatively distant from each other, effectively suppressing relative rotation between neighboring battery packs 100.

In an embodiment, embossed front assembly portions 115 may be provided on the front case 110, and engraved rear assembly portions 125 may be provided on the rear case 120. However, in some embodiments, engraved front assembly portions 115 may be provided on the front case 110, and embossed rear assembly portions 125 may be provided on the rear case 120. In some embodiments, embossed and engraved front assembly portions 115 may be provided on the front side F of the front case 110, and embossed and engraved rear assembly portions 125 complementary to the embossed and engraved front assembly portions 115 may be provided on the rear side B of the rear case 120.

In an embodiment, neighboring battery packs 100 may be arranged with left-right reverse orientations in the left-right direction connecting the first and second output terminals E1 and E2 such that the first and second output terminals E1 and E2 of the neighboring battery packs 100 may be electrically connected to each other via bus bars (not shown) to connect the neighboring battery packs 100 in series to each other. In this case, the front cases 110 of the neighboring battery packs 100 may face each other, and the rear cases 120 of the neighboring battery packs 100 may face each other. The front cases 110 of the neighboring battery packs 100 may face each other in a state in which the front cases 110 are rotated 180 degrees relative to each other, that is, in a left-right reversed state. Similarly, the rear cases 120 of the neighboring battery packs 100 may face each other in a state in which the rear cases 120 are rotated 180 degrees relative to each other, that is, in a left-right reversed state.

In a battery pack array in which neighboring battery packs 100 are left-right reversed relative to each other, embossed and engraved front assembly portions 115 may be provided at left and right positions on the front cases 110 of the neighboring battery packs 100, and embossed and engraved rear assembly portions 125 may be provided at left and right positions on the rear cases 120 of the neighboring battery packs 100. Therefore, in the battery pack array with left-right reverse orientations, the embossed front assembly portions 115 and the engraved front assembly portions 115 having complementary shapes may be fitted to each other by insertion, and, similarly, the embossed rear assembly portions 125 and the engraved rear assembly portions 125 having complementary shapes may be fitted to each other by insertion.

The battery pack 100 may include the front case 110 and the rear case 120 facing each other and coupled to each other in the front-rear direction, and the front side F of the front case 110 and the rear side B of the rear case 120 respectively face other battery packs 100 arranged in the front-rear direction. Front ribs 111 and 112 and rear ribs 121 and 122 may respectively be provided on the front side F of the front case 110 and the rear side B of the rear case 120. For example, the front ribs 111 and 112 and the rear ribs 121 and 122 may be provided on the front side F of the front case 110 and the rear side B of the rear case 120, respectively, together with the front assembly portions 115 and the rear assembly portions 125. For example, the front assembly portions 115 and the rear assembly portions 125 may have complementary embossed and engraved shapes for assembly by insertion, but all the front ribs 111 and 112 and the rear ribs 121 and 122 may have a protruding shape. The front ribs 111 and 112 and the rear ribs 121 and 122 are not coupled to each other but are provided to prevent or substantially prevent incorrect assembly of battery packs 100. In a state in which battery packs 100 neighboring each other in the front-rear direction are correctly arranged without incorrect left-right orientations, the front ribs 111 and 112 and the rear ribs 121 and 122 do not interfere with each other. However, in a state in which battery packs 100 neighboring each other in the front-rear direction are arranged with incorrect left-right orientations, the front ribs 111 and 112 and the rear ribs 121 and 122 physically interfere with each other, and, thus, the neighboring battery packs 100 may be spaced apart from each other and may not be brought into tight contact with each other.

In the present disclosure, the left-right direction may refer to a direction connecting the first and second output terminals E1 and E2, or in which the first and second output terminals E1 and E2 are spaced apart. If neighboring battery packs 100 have incorrect orientations in the left-to-right direction, the first and second output terminals E1 and E2 of the neighboring battery packs 100 are not aligned with each other, and errors may occur when the neighboring battery packs 100 are electrically connected to each other using bus bars (not shown).

For example, neighboring battery packs 100 may be arranged with left-right reverse orientations such that first and second output terminals E1 and E2 having different polarities of the neighboring battery packs 100 may be adjacent to each other and may be electrically connected in series to each other using bus bars (not shown). In this case, since the front ribs 111 and 112 and the rear ribs 121 and 122 are located at asymmetric positions in the left-to-right direction, if the neighboring battery packs 100 are brought into contact with each other with left-right reverse orientations in a relatively 180-degree rotated state, the front ribs 111 and 112 of the neighboring battery packs 100 do not physically interfere with each other, and the rear ribs 121 and 122 of the neighboring battery packs 100 do not physically interfere with each other. For example, the front ribs 111 and 112 and the rear ribs 121 and 122 may be located at positions biased toward one side in the left-to-right direction, that is, at positions biased toward one of the first and second output terminals E1 and E2. The front ribs 111 and 112 and the rear ribs 121 and 122 provided at positions biased toward one of left and right sides as described above may not physically interfere with each other when the neighboring battery packs 100 are rotated 180 degrees relative to each other such that the neighboring battery packs 100 may be left-right reversed. If the front ribs 111 and 112 and the rear ribs 121 and 122 are provided at symmetric positions in the left-to-right direction, although the neighboring battery packs 100 are left-right reversed, the front ribs 111 and 112 provided at symmetric positions may physically interfere with each other, and the rear ribs 121 and 122 provided at symmetric positions may physically interfere with each other. That is, if the front ribs 111 and 112 and the rear ribs 121 and 122 are provided at symmetric positions in the left-to-right direction, there is no difference regardless of whether the neighboring battery packs 100 have left-right orientation errors. Since the front ribs 111 and 112 and the rear ribs 121 and 122 do not have complementary shapes but all have a protruding shape, if the front ribs 111 and 112 and the rear ribs 121 and 122 are provided at symmetric positions in the left-to-right direction, the front ribs 111 and 112 and the rear ribs 121 and 122 physically interfere with each other regardless of left-right orientations of the neighboring battery packs 100. If the front ribs 111 and 112 and the rear ribs 121 and 122 are provided at symmetric positions, although the front ribs 111 and 112 and the rear ribs 121 and 122 are rotated 180 degrees relative to each other and are thus left-right reversed, physical interference occurs between the front ribs 111 and 112 placed at the same positions and between the rear ribs 121 and 122 placed at the same positions.

In an embodiment, the front ribs 111 and 112 may include: a pair of first front ribs 111 formed on the front side F of the front case 110 and extending in mutually-facing directions from the first and second sides U and L of the battery pack 100; and a pair of second front ribs 112 formed on the front side F of the front case 110 and extending in mutually-facing directions from the first and second sides U and L. That is, the front ribs 111 and 112 may include four front ribs 111 and 112. In this case, the first front ribs 111 and the second front ribs 112 may be located at asymmetric positions spaced apart from an end and the other end of the battery pack 100 by different distances d1 and d2 in the left-to-right direction. For example, the end of the battery pack 100 may refer to an end of the battery pack 100 adjacent to the first output terminal E1 in the left-right direction connecting the first and second output terminals E1 and E2, and the other end of the battery pack 100 may refer to an end of the battery pack 100 adjacent to the second output terminal E2 in the left-to-right direction.

Since the first and second front ribs 111 and 112 are provided at asymmetric positions spaced apart from the end and the other end of the battery pack 100 by different distances d1 and d2, the first and second front ribs 111 and 112 are staggered between neighboring battery packs 100 which are left-right reversed relative to each other, and thus do not physically interfere with each other. That is, neighboring battery packs 100 which are left-right reversed relative to each other may be brought into tight contact with each other without interference between the first and second front ribs 111 and 112 and a gap between the neighboring battery packs 100.

Similarly, in an embodiment, the rear ribs 121 and 122 may include: a pair of first rear ribs 121 formed on the rear side B of the rear case 120 and extending in mutually-facing directions from the first and second sides U and L of the battery pack 100; and a pair of second rear ribs 122 formed on the rear side B of the rear case 120 and extending in mutually-facing directions from the first and second sides U and L. That is, the rear ribs 121 and 122 may include four rear ribs 121 and 122. In this case, the first rear ribs 121 and the second rear ribs 122 may be located at asymmetric positions spaced apart from an end and the other end of the battery pack 100 by different distances d1 and d2 in the left-to-right direction. As described above, since the first and second rear ribs 121 and 122 are provided at asymmetric positions spaced apart from the end and the other end of the battery pack 100 by different distances d1 and d2, the first and second rear ribs 121 and 122 are staggered between neighboring battery packs 100 which are left-right reversed relative to each other, and thus do not physically interfere with each other. That is, neighboring battery packs 100 which are left-right reversed relative to each other may be brought into tight contact with each other without interference between the first and second rear ribs 121 and 122 and a gap between the neighboring battery packs 100.

In an embodiment, when neighboring battery packs 100 are arranged in the same left-right orientation without being left-right reversed relative to each other, the front ribs 111 and 112 and the rear ribs 121 and 122 physically interfere with each other, and, thus, the neighboring battery packs 100 are spaced apart from each other. For example, when neighboring battery packs 100 are arranged in the same left-right orientation without being left-right reversed relative to each other, a front case 110 and a rear case 120 of the neighboring battery packs 100 face each other, and the first and second front ribs 111 and 112 and the first and second rear ribs 121 and 122 of the neighboring battery packs 100 physically interfere with each other. For example, the first front ribs 111 and the first rear ribs 121 of the neighboring battery packs 100 physically interfere with each other, and the second front ribs 112 and the second rear ribs 122 of the neighboring battery packs 100 physically interfere with each other. When neighboring battery packs 100 are incorrectly oriented as described above, the neighboring battery packs 100 are spaced apart from each other, and, thus, a worker may detect incorrect orientations of the neighboring battery packs 100. To this end, the first front ribs 111 and the first rear ribs 121 may be at the same distance d1 from the end of the battery pack 100 in the left-to-right direction, and the second front ribs 112 and the second rear ribs 122 may be at the same distance d2 from the other end of the battery pack 100 in the left-to-right direction. For example, the end of the battery pack 100 may refer to an end of the battery pack 100 adjacent to the first output terminal E1 in the left-right direction connecting the first and second output terminals E1 and E2, and the other end of the battery pack 100 may refer to an end of the battery pack 100 adjacent to the second output terminal E2 in the left-right direction connecting the first and second output terminals E1 and E2.

Since the first and second front ribs 111 and 112 are provided at asymmetric positions spaced apart from the end and the other end of the battery packs 100 by different distances d1 and d2, the first and second front ribs 111 and 112 do not physically interfere with each other when neighboring battery packs 100 are left-right reversed relative to each other. Similarly, since the first and second rear ribs 121 and 122 are provided at asymmetric positions spaced apart from the end and the other end of the battery packs 100 by different distances d1 and d2, the first and second rear ribs 121 and 122 do not physically interfere with each other when neighboring battery packs 100 are left-right reversed relative to each other. In an embodiment, when neighboring battery packs 100 are left-right reversed relative to each other, front cases 110 of the neighboring battery packs 100 may face each other, and rear cases 120 of the neighboring battery packs 100 may face each other. In this case, since the front ribs 111 and 112 and the rear ribs 121 and 122 face each other in a relatively 180-degree rotated state, the front ribs 111 and 112 and the rear ribs 121 and 122 are staggered and do not physically interfere with each other.

The first front ribs 111 and the first rear ribs 121 are at the same distance d1 from the end of the battery pack 100, and the second front ribs 112 and the second rear ribs 122 are at the same distance d2 from the other end of the battery pack 100. Thus, when neighboring battery packs 100 are arranged in the same left-right orientation, physical interference occurs between the first front ribs 111 and the first rear ribs 121 and between the second front ribs 112 and the second rear ribs 122. In an embodiment, when neighboring battery packs 100 are arranged in the same left-right orientation, a front case 110 and a rear case 120 of the neighboring battery packs 100 may face each other in a state in which the first front ribs 111 and the first rear ribs 121 interfere with each other at the same positions, and the second front ribs 112 and the second rear ribs 122 interfere with each other at the same positions.

Thus, a worker may detect an incorrect orientation if neighboring battery packs 100 are spaced apart from each other and may confirm a correct orientation if neighboring battery packs 100 are in tight contact with each other.

The battery pack 100 may be arranged together with other battery packs 100 to form a battery pack array (refer to FIG. 8), and various performance requirements may be satisfied using battery packs 100 having the same structure by adjusting the number of battery packs 100 in a battery pack array according to required output power. The battery pack 100 may include structures for structural binding with other battery packs 100 in a battery pack array. In an embodiment, the battery pack 100 may include binding holes 100', and battery packs 100 of a battery pack array may be structurally bound as a module by inserting long binding members (not shown) through binding holes 100' formed in four corners of the battery packs 100.

Referring to FIG. 8, a battery pack 100 may be connected to other battery packs 100 having the same shape to form the battery pack array. Although not shown in the drawings, the battery pack 100 may be electrically coupled to other battery packs 100 via bus bars (not shown) electrically connecting the output terminals E1 and E2 of the battery packs 100 to each other. For example, the bus bars (not shown) may connect the battery packs 100 in parallel to each other by connecting output terminals E1 and E2 of the battery packs 100 having the same polarity to each other or may connect the battery packs 100 in series to each other by connecting output terminals E1 and E2 of the battery pack 100 having different polarities to each other.

The battery pack array may further include a master pack 200 connected to the battery packs 100 for controlling charge-discharge operations of the battery packs 100. The master pack 200 may be electrically connected to the plurality of battery packs 100 and placed in a charge-discharge path and may control charge and discharge operations of the plurality of battery packs 100. The master pack 200 may be connected to the BMS (not shown) of each of the battery packs 100 for communication with the BMS through a communication line (not shown) and may output control signals.

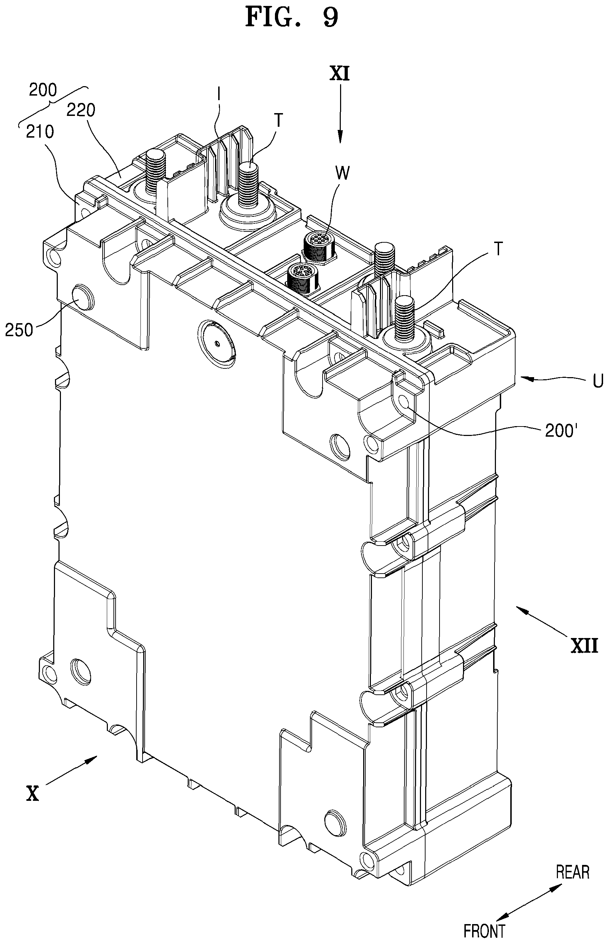

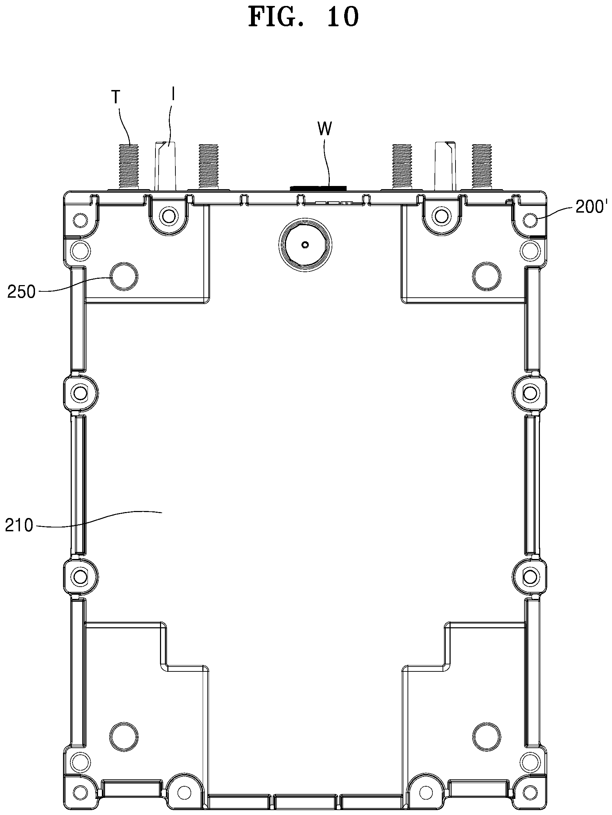

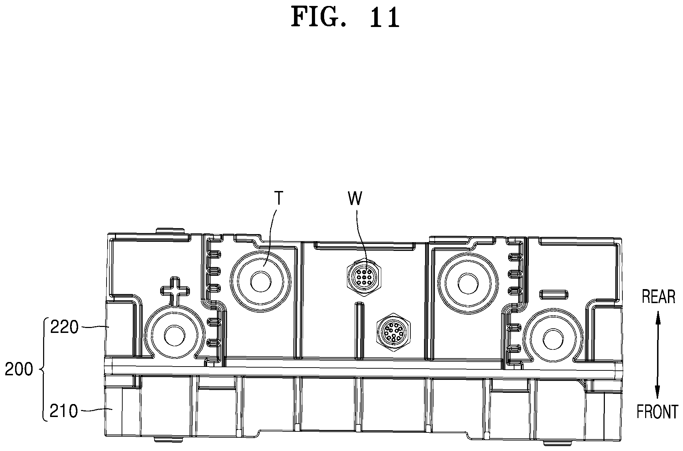

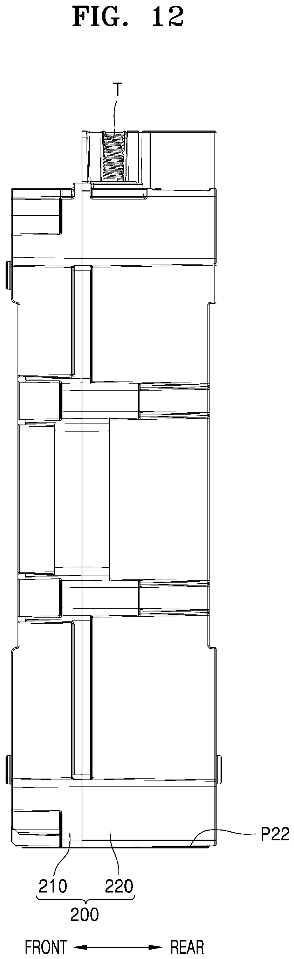

FIG. 9 is a perspective view illustrating the master pack 200 illustrated in FIG. 8; FIG. 10 is a front view illustrating the master pack 200 in a direction X in FIG. 9; FIG. 11 is a top view illustrating the master pack 200 in a direction XI in FIG. 9; and FIG. 12 is a side view illustrating the master pack 200 in a direction XII in FIG. 9.

Referring to FIGS. 9 to 12, four output terminals T may be provided on a first side of the master pack 200, and the four output terminals T may include two output terminals T for electrical connection with the battery packs 100 and two output terminals T for providing electrical output power of the battery pack array therethrough. The output terminals T may be insulated from each other and protected from external impactive force by insulation ribs I crossing gaps between the output terminals T. Together with the output terminals T, two communication terminals W may be provided on the first side of the master pack 200, and the two communication terminals W may include a communication terminal W for connection with the battery packs 100 and a communication terminal W for connection with an external circuit.

In an embodiment, the master pack 200 does not accommodate battery cells and may thus be smaller than the battery packs 100, and a space remaining due to the size difference between the master pack 200 and the battery packs 100 may be used to place another component provided inside a device, such as an automobile, on which the battery pack array is mounted or may be used to place an additional battery pack 100 to increase the number of battery packs 100 in the battery pack array and thus to increase electrical output power of the battery pack array.

In an embodiment, the master pack 200 may have a shape substantially similar to the shape of the battery packs 100. For example, the master pack 200 may include a front case 210 and a rear case 220 facing each other and coupled to each other in the front-rear direction in which the battery packs 100 are arranged, and assembly portions 250 (refer to FIG. 10) including front or rear assembly portions may be provided on a front side of the front case 210 and a rear side of the rear case 220. In addition, binding holes 200' (refer to FIG. 10) may be formed in four corners of the master pack 200. In addition, an inclined second surface P22 may be provided on a second side of the master pack 200 opposite the first side of the master pack 200 on which the output terminals T are provided. For example, the inclined second surface P22 may be provided on a second side of the rear case 220.

As described above, according to one or more embodiments, the battery pack has an improved structure such that outwardly protruding structures, such as the output terminals for providing electrical output power, the communication terminal for connection with a communication line, or the pressure regulating valve may be effectively protected from external impactive force.

In addition, the battery pack includes structures for preventing or substantially preventing incorrect assembly with other battery packs or for assembly or binding with other battery packs, and, thus, a plurality of such unit battery packs substantially having the same shape may be combined to easily provide a battery pack array having high electrical output power.

It is to be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the scope of the following claims.

## Claims

1. A battery pack comprising:
a case comprising a cell accommodation portion (G1) to accommodate a battery cell; and
output terminals (E1, E2) protruding upward from a first side of an upper portion of the case,
wherein the output terminals (E1, E2) protrude from first height-difference surfaces (S1) stepped downward from a first surface (P1) that is an uppermost surface of the first side of the case, and
wherein a second surface (P2) inclined with respect to the first surface (P1) is on a second side of a lower portion which is opposite the first side of the battery pack.

2. The battery pack of claim 1, wherein the output terminals (E1, E2) comprise first and second output terminals, and
the first height-difference surfaces (S1) are on both outermost lateral sides along the first side in a left-right direction of the battery pack in which the first and second output terminals (E1, E2) are spaced apart.

3. The battery pack of claim 1 or claim 2, wherein the first surface (P1) comprises a pair of first surfaces on both sides of a second height-difference surface (S2) stepped downward from the pair of first surfaces, the second height-difference surface (S2) being between the pair of first surfaces.

4. The battery pack of claim 3, wherein the second height-difference surface (S2) is at a center position of the first side in the left-right direction of the battery pack.

5. The battery pack of claim 3 or claim 4, further comprising at least one of a communication terminal (C) and a pressure regulating valve (VA) protruding from the second height-difference surface (S2).

6. The battery pack of claim 5, wherein a pair of barrier ribs (R) is on the second height-difference surface (S2), at least one of the communication terminal (C) and the pressure regulating valve (VA) being between the pair of barrier ribs.

7. The battery pack of any of claims 3 to 6, wherein the first and second height-difference surfaces (S1, S2) are stepped downward from the first surface (P1) such that the first height-difference surfaces are lower than the second height-difference surface.

8. The battery pack of any of claims 3 to 7, wherein the first height-difference surfaces (S1) are on both lateral outer sides of the pair of first surfaces.

9. The battery pack of any preceding claim, wherein the case comprises a front case (110) and a rear case (120) facing each other and coupled to each other in a front-rear direction, and
the rear case (120) is thicker than the front case (110) in the front-rear direction.

10. The battery pack of claim 9, wherein the output terminals (E1, E2) are on the rear case (120) at positions biased toward the front case (110), and wherein the output terminals (E1, E2) are at center positions in a thickness direction of the battery pack parallel to the front-rear direction.

11. The battery pack of any preceding claim, wherein support ribs (SL) protrude from the second surface of the second side to form a flat bottom surface as a support base of the battery pack.

12. The battery pack of any preceding claim, wherein the case comprises a front case (110) and a rear case (120) facing each other and coupled to each other in a front-rear direction, wherein the front case and the rear case each have assembly portions (115, 125), respectively on a front side of the front case and a rear side of the rear case, at corresponding positions and with complementary shapes, the assembly portions (115, 125) being positioned at four corner positions of the front side of the front case and four corner positions of the rear side of the rear case, wherein the front assembly portions are embossed on the front side of the front case, the rear assembly portions are engraved on the rear side of the rear case.

13. The battery pack of any preceding claim, wherein the case comprises a front case (110) and a rear case (120) facing each other and coupled to each other in a front-rear direction, and
a front rib (111) and a rear rib (112) respectively protrude from a front side of the front case and a rear side of the rear case wherein the front rib (111) comprises a pair of first front ribs and a pair of second front ribs, each pair extending on the front side of the front case in mutually-facing directions from a first side of an upper portion and a second side of a lower portion of the front case, and the first and second front ribs are at first and second positions that are different from each other in a left-right direction of the battery pack, and
wherein the rear rib (112) comprises a pair of first rear ribs and a pair of second rear ribs, each pair extending on the rear side of the rear case in mutually-facing directions from a first side of an upper portion and a second side of a lower portion of the rear case, and
the first and second rear ribs are at first and second positions that different from each other in the left-right direction of the battery pack.

14. The battery pack of claim 13, wherein the first positions are relatively adjacent to a first output terminal of the output terminals in the left-right direction of the battery pack in which the first output terminal and a second output terminal of the output terminals are spaced apart, and
the second positions are relatively adjacent to the second output terminal in the left-right direction of the battery pack.

## Patentansprüche

1. Batteriepack, Folgendes umfassend:
ein Gehäuse umfassend einen Zellenaufnahmeabschnitt (G1) zum Aufnehmen einer Batteriezelle; und
Ausgangsanschlüsse (E1, E2), die von einer ersten Seite eines oberen Abschnitts des Gehäuses nach oben vorstehen,
wobei die Ausgangsanschlüsse (E1, E2) von ersten Höhenunterschiedsflächen (S1) vorstehen, die von einer ersten Fläche (P1), die eine oberste Fläche der ersten Seite des Gehäuses ist, nach unten abgestuft sind, und
wobei sich eine zweite Fläche (P2), die in Bezug auf die erste Fläche (P1) geneigt ist, auf einer zweiten Seite eines unteren Abschnitts befindet, der der ersten Seite des Batteriepacks gegenüberliegt.

2. Batteriepack nach Anspruch 1, wobei die Ausgangsanschlüsse (E1, E2) erste und zweite Ausgangsanschlüsse umfassen, und
sich die ersten Höhenunterschiedsflächen (S 1) an beiden äußersten seitlichen Seiten entlang der ersten Seite in einer Links-Rechts-Richtung des Batteriepacks befinden, in der die ersten und zweiten Ausgangsanschlüsse (E1, E2) voneinander beabstandet sind.

3. Batteriepack nach Anspruch 1 oder Anspruch 2, wobei die erste Fläche (P1) ein Paar von ersten Flächen auf beiden Seiten einer zweiten Höhenunterschiedsfläche (S2) umfasst, die von dem Paar von ersten Flächen nach unten abgestuft ist, wobei sich die zweite Höhenunterschiedsfläche (S2) zwischen dem Paar von ersten Flächen befindet.

4. Batteriepack nach Anspruch 3, wobei sich die zweite Höhenunterschiedsfläche (S2) in einer mittleren Position der ersten Seite in der Links-Rechts-Richtung des Batteriepacks befindet.

5. Batteriepack nach Anspruch 3 oder Anspruch 4, ferner umfassend mindestens eines von einem Kommunikationsanschluss (C) und einem Druckregelventil (VA), das aus der zweiten Höhenunterschiedsfläche (S2) vorsteht.

6. Batteriepack nach Anspruch 5, wobei sich ein Paar von Sperrrippen (R) auf der zweiten Höhenunterschiedsfläche (S2) befindet, wobei mindestens eines von dem Kommunikationsanschluss (C) und dem Druckregelventil (VA) zwischen dem Paar von Sperrrippen liegt.

7. Batteriepack nach einem der Ansprüche 3 bis 6, wobei die ersten und zweiten Höhenunterschiedsflächen (S1, S2) von der ersten Fläche (P1) nach unten abgestuft sind, sodass die ersten Höhenunterschiedsflächen niedriger liegen als die zweite Höhenunterschiedsfläche.

8. Batteriepack nach einem der Ansprüche 3 bis 7, wobei sich die ersten Höhenunterschiedsflächen (S 1) an beiden seitlichen Außenseiten des Paars von ersten Flächen befinden.

9. Batteriepack nach einem der vorhergehenden Ansprüche, wobei das Gehäuse ein vorderes Gehäuse (110) und ein hinteres Gehäuse (120) umfasst, die einander zugewandt sind und in einer Vorne-Hinten-Richtung miteinander gekoppelt sind, und
das hintere Gehäuse (120) in der Vorne-Hinten-Richtung dicker ist als das vordere Gehäuse (110).

10. Batteriepack nach Anspruch 9, wobei sich die Ausgangsanschlüsse (E1, E2) am hinteren Gehäuse (120) an Positionen befinden, die in Richtung des vorderen Gehäuses (110) vorgespannt sind, und wobei sich die Ausgangsanschlüsse (E1, E2) an mittleren Positionen in einer Dickenrichtung des Batteriepacks parallel zur Vorne-Hinten-Richtung befinden.

11. Batteriepack nach einem der vorhergehenden Ansprüche, wobei Stützrippen (SL) von der zweiten Fläche der zweiten Seite vorstehen, um eine flache Bodenfläche als eine Stützbasis des Batteriepacks zu bilden.

12. Batteriepack nach einem der vorhergehenden Ansprüche, wobei das Gehäuse ein vorderes Gehäuse (110) und ein hinteres Gehäuse (120) umfasst, die einander zugewandt sind und in einer Vorne-Hinten-Richtung miteinander gekoppelt sind, wobei das vordere Gehäuse und das hintere Gehäuse jeweils Montageabschnitte (115, 125) jeweils auf einer Vorderseite des vorderen Gehäuses und einer Rückseite des hinteren Gehäuses an entsprechenden Positionen und mit komplementären Formen aufweisen, wobei die Montageabschnitte (115, 125) an vier Eckpositionen der Vorderseite des vorderen Gehäuses und vier Eckpositionen der Rückseite des hinteren Gehäuses positioniert sind, wobei die vorderen Montageabschnitte auf der Vorderseite des vorderen Gehäuses geprägt sind, die hinteren Montageabschnitte auf der Rückseite des hinteren Gehäuses eingraviert sind.

13. Batteriepack nach einem der vorhergehenden Ansprüche, wobei das Gehäuse ein vorderes Gehäuse (110) und ein hinteres Gehäuse (120) umfasst, die einander zugewandt sind und in einer Vorne-Hinten-Richtung miteinander gekoppelt sind, und
eine vordere Rippe (111) und eine hintere Rippe (112) jeweils von einer Vorderseite des vorderen Gehäuses und einer Rückseite des hinteren Gehäuses vorstehen, wobei die vordere Rippe (111) ein Paar von ersten vorderen Rippen und ein Paar von zweiten vorderen Rippen umfasst, wobei sich jedes Paar auf der Vorderseite des vorderen Gehäuses in einander zugewandten Richtungen von einer ersten Seite eines oberen Abschnitts und einer zweiten Seite eines unteren Abschnitts des vorderen Gehäuses erstreckt, und sich die ersten und die zweiten vorderen Rippen an ersten und zweiten Positionen befinden, die sich in einer Links-Rechts-Richtung des Batteriepacks voneinander unterscheiden, und
wobei die hintere Rippe (112) ein Paar von ersten hinteren Rippen und ein Paar von zweiten hinteren Rippen umfasst, wobei sich jedes Paar an der Rückseite des hinteren Gehäuses in einander zugewandten Richtungen von einer ersten Seite eines oberen Abschnitts und einer zweiten Seite eines unteren Abschnitts des hinteren Gehäuses erstreckt, und
sich die ersten und die zweiten hinteren Rippen an ersten und zweiten Positionen befinden, die sich in der Links-Rechts-Richtung des Batteriepacks voneinander unterscheiden.

14. Batteriepack nach Anspruch 13, wobei die ersten Positionen relativ benachbart zu einem ersten Ausgangsanschluss der Ausgangsanschlüsse in der Links-Rechts-Richtung des Batteriepacks liegen, in der der erste Ausgangsanschluss und ein zweiter Ausgangsanschluss der Ausgangsanschlüsse voneinander beabstandet sind, und
die zweiten Positionen relativ benachbart zu dem zweiten Ausgangsanschluss in der Links-Rechts-Richtung des Batteriepacks liegen.

## Revendications

1. Bloc-batterie comprenant :
un boîtier comprenant une partie de logement d'élément (G1) pour loger un élément de batterie ; et
des bornes de sortie (E1, E2) faisant saillie vers le haut à partir d'un premier côté d'une partie supérieure du boîtier,
dans lequel les bornes de sortie (E1, E2) font saillie à partir de premières surfaces à différence de hauteur (S1) étagées vers le bas à partir d'une première surface (P1) qui est une surface la plus haute du premier côté du boîtier, et
dans lequel une seconde surface (P2) inclinée par rapport à la première surface (P1) est sur un deuxième côté d'une partie inférieure qui est en face du premier côté du bloc-batterie.

2. Bloc-batterie selon la revendication 1, dans lequel les bornes de sortie (E1, E2) comprennent des première et seconde bornes de sortie, et
les premières surfaces à différence de hauteur (S 1) sont sur les deux côtés latéraux les plus à l'extérieur le long du premier côté dans une direction gauche-droite du bloc-batterie dans lequel les première et seconde bornes de sortie (E1, E2) sont espacées.

3. Bloc-batterie selon la revendication 1 ou la revendication 2, dans lequel la première surface (P1) comprend une paire de premières surfaces sur les deux côtés d'une seconde surface à différence de hauteur (S2) étagée vers le bas à partir de la paire de premières surfaces, la seconde surface à différence de hauteur (S2) étant entre la paire de premières surfaces.

4. Bloc-batterie selon la revendication 3, dans lequel la seconde surface à différence de hauteur (S2) est au niveau d'une position centrale du premier côté dans la direction gauche-droite du bloc-batterie.

5. Bloc-batterie selon la revendication 3 ou la revendication 4, comprenant en outre au moins une parmi une borne de communication (C) et une soupape de régulation de pression (VA) faisant saillie de la seconde surface à différence de hauteur (S2).

6. Bloc-batterie selon la revendication 5, dans lequel une paire de nervures formant barrière (R) est sur la seconde surface à différence de hauteur (S2), au moins une de la borne de communication (C) et de la soupape de régulation de pression (VA) étant entre la paire de nervures formant barrière.

7. Bloc-batterie selon l'une quelconque des revendications 3 à 6, dans lequel les premières et seconde surfaces à différence de hauteur (S1, S2) sont étagées vers le bas à partir de la première surface (P1) de telle sorte que les premières surfaces à différence de hauteur sont plus basses que la seconde surface à différence de hauteur.

8. Bloc-batterie selon l'une quelconque des revendications 3 à 7, dans lequel les premières surfaces à différence de hauteur (S1) sont sur les deux côtés externes latéraux de la paire de premières surfaces.

9. Bloc-batterie selon une quelconque revendication précédente, dans lequel le boîtier comprend un boîtier avant (110) et un boîtier arrière (120) se faisant face et étant couplés l'un à l'autre dans une direction avant-arrière, et
le boîtier arrière (120) est plus épais que le boîtier avant (110) dans la direction avant-arrière.

10. Bloc-batterie selon la revendication 9, dans lequel les bornes de sortie (E1, E2) sont sur le boîtier arrière (120) au niveau de positions précontraintes vers le boîtier avant (110), et dans lequel les bornes de sortie (E1, E2) sont au niveau de positions centrales dans une direction de l'épaisseur du bloc-batterie parallèle à la direction avant-arrière.

11. Bloc-batterie selon une quelconque revendication précédente, dans lequel des nervures de support (SL) font saillie à partir de la seconde surface du deuxième côté pour former une surface inférieure plate en tant que base de support du bloc-batterie.

12. Bloc-batterie selon une quelconque revendication précédente, dans lequel le boîtier comprend un boîtier avant (110) et un boîtier arrière (120) se faisant face et étant couplés l'un à l'autre dans une direction avant-arrière, dans lequel le boîtier avant et le boîtier arrière présentent chacun des parties d'assemblage (115, 125), respectivement sur un côté avant du boîtier avant et un côté arrière du boîtier arrière, au niveau de positions correspondantes et avec des formes complémentaires, les parties d'assemblage (115, 125) étant positionnées au niveau de quatre positions en coin du côté avant du boîtier avant et de quatre positions en coin du côté arrière du boîtier arrière, dans lequel les parties d'assemblage avant sont gaufrées sur le côté avant du boîtier avant, les parties d'assemblage arrière sont gravées sur le côté arrière du boîtier arrière.

13. Bloc-batterie selon une quelconque revendication précédente, dans lequel le boîtier comprend un boîtier avant (110) et un boîtier arrière (120) se faisant face et étant couplés l'un à l'autre dans une direction avant-arrière, et
une nervure avant (111) et une nervure arrière (112) font saillie respectivement à partir d'un côté avant du boîtier avant et d'un côté arrière du boîtier arrière, dans lequel la nervure avant (111) comprend une paire de premières nervures avant et une paire de secondes nervures avant, chaque paire s'étendant sur le côté avant du boîtier avant dans des directions se faisant face mutuellement à partir d'un premier côté d'une partie supérieure et d'un deuxième côté d'une partie inférieure du boîtier avant, et les premières et secondes nervures avant sont au niveau de premières et secondes positions qui sont différentes les unes des autres dans une direction gauche-droite du bloc-batterie, et
dans lequel la nervure arrière (112) comprend une paire de premières nervures arrière et une paire de secondes nervures arrière, chaque paire s'étendant sur le côté arrière du boîtier arrière dans des directions se faisant face mutuellement à partir d'un premier côté d'une partie supérieure et d'un deuxième côté d'une partie inférieure du boîtier arrière, et
les premières et secondes nervures arrière sont au niveau de premières et secondes positions qui sont différentes les unes des autres dans la direction gauche-droite du bloc-batterie.

14. Bloc-batterie selon la revendication 13, dans lequel les premières positions sont relativement adjacentes à une première borne de sortie des bornes de sortie dans la direction gauche-droite du bloc-batterie dans laquelle la première borne de sortie et une seconde borne de sortie des bornes de sortie sont espacées, et
les secondes positions sont relativement adjacentes à la seconde borne de sortie dans la direction gauche-droite du bloc-batterie.
